# EUROPÄISCHE PATENTSCHRIFT

(11) **EP 3 149 710 B1**
(45) Veröffentlichungstag und Bekanntmachung des Hinweises auf die Patenterteilung: **23.06.2021**
(21) Anmeldenummer: 15719980.3
(22) Anmeldetag: 14.04.2015
(51) Int. Cl.: G07C 5/00, G07C 5/08

(54) **FAHRZEUGDIAGNOSEVORRICHTUNG UND DATENÜBERTRAGUNGSVORRICHTUNG**
VEHICLE DIAGNOSIS DEVICE AND DATA COMMUNICATION DEVICE
APPAREIL POUR DIAGNOSTIQUER UNE VÉHICULE ET APPAREIL DE COMMUNICATION DE DONNÉES

(30) Priorität: 28.05.2014 DE 102014210238
(43) Veröffentlichungstag der Anmeldung: 05.04.2017
(73) Patentinhaber: Robert Bosch GmbH, 70442 Stuttgart (DE)
(72) Erfinder: HOKENMAIER, Fabian, 73116 Waeschenbeuren (DE); DOEHREN, Stefan, 73630 Remshalden-Grunbach (DE); LE BRUN, Marco, I-50129 Firenze (IT)
(86) Internationale Anmeldenummer: PCT/EP2015/058033
(87) Internationale Veröffentlichungsnummer: WO 2015/180885

(56) Entgegenhaltungen:
- EP-A1- 2 259 230
- EP-A2- 2 605 230
- US-A1- 2006 217 855
- US-A1- 2012 245 786
- None

## Beschreibung

Die Erfindung betrifft eine Fahrzeugdiagnosevorrichtung zur Bestimmung des Zustands von mindestens einer Komponente eines Kraftfahrzeugs sowie ein Verfahren zum Betrieb einer Fahrzeugdiagnosevorrichtung und ein Verfahren zur Herstellung einer Fahrzeugdiagnosevorrichtung.

### Stand der Technik

Fahrzeugdiagnosevorrichtungen zur Bestimmung des Zustands von Kraftfahrzeugkomponenten haben sich bewährt. Solche Fahrzeugdiagnosevorrichtungen sind an Fahrzeugschnittstellen anschließbar und können zur Auswertung von Fahrzeugdaten, wie sie z.B. in Fahrzeugsteuergeräten oder Fahrzeuganzeigesystemen vorgehalten werden, herangezogen werden. Die Fahrzeugdiagnosevorrichtungen werden sowohl zur Fehleranalyse, zur Programmierung von Fahrzeugsteuergeräten als auch für routinemäßige Wartungsaufgaben eingesetzt. In allen Fällen wird der Zustand von einer oder mehreren Fahrzeugkomponenten bestimmt, was wiederum Aufschluss über zu wartende oder auszutauschende Komponenten gibt.

Während bei der Diagnoseschnittstelle des Kraftfahrzeugs ("Vehicle Communication Interface", VCI) eine gewisse Standardisierung vorhanden ist, gibt es eine große Anzahl verschiedener Diagnoseprotokolle. Diese unterscheiden sich zum Einen von Hersteller zu Hersteller. Zum Anderen unterscheiden sich die Diagnoseprotokolle je nach Art und Anzahl der überwachten Komponenten. Weiterhin gibt es sehr unterschiedliche Verwendungs-Szenarien für solche Fahrzeugdiagnosevorrichtungen. In manchen Anwendungen kommt es lediglich darauf an, die für das Funktionieren des Fahrzeugs absolut notwendigen und sicherheitstechnisch relevanten Daten zu überprüfen. Ein Beispiel dafür sind die von Pannendiensten verwendeten Fahrzeugdiagnosevorrichtungen. In anderen Fällen ist die möglichst umfassende Überprüfung aller Fahrzeugfunktionen das Ziel. Zum Beispiel kann es während einer Routine-Wartung eines Fahrzeugs in Verbindung mit einem Fahrzeugservice gewünscht sein, auch nicht sicherheitstechnisch relevante Funktionen, wie zum Beispiel das Funktionieren eines elektrischen Schiebedachs, per Fahrzeugdiagnosevorrichtung zu überprüfen.

Das Dokument US 2012/245786 A1 zeigt eine Schnittstellenvorrichtung mit einem Prozessor, wobei der Prozessor mit einem Speicher mit unterschiedlichen Fahrzeugbetriebsparametern kommuniziert, aus denen ein Benutzer Filter einrichten kann, ein mit dem Prozessor kommunizierendes Kommunikationsmodul und mehrere Protokollbusmodule, die verschiedene Diagnoseprotokolle unterstützen, wobei mehrere Filter, entsprechend den Indikatoren der vom Benutzer ausgewählten Parameter eingerichtet werder Der Schnittstellenvorrichtung unterstützt gleichzeitig mehrere Protokolle, die in demselben Fahrzeug vorhanden sein können.

Das Dokument US 2006/217855 A1 zeigt einen Fahrzeugdiagnoseschnittstellenadapter, der Daten von einem Fahrzeugschnittstellenverbinder empfängt und der zwei beliebige Stifte am Fahrzeugschnittstellenverbinder mit einer beliebigen von mehreren Kommunikationsprotokollschaltungen verbinden kann.

### Offenbarung der Erfindung

Eine Aufgabe der Erfindung besteht darin, eine Systemarchitektur für eine Fahrzeugdiagnosevorrichtung bereitzustellen, die die effiziente Abdeckung einer großen Anzahl von Anwendungs-Szenarien ermöglicht.

Eine erfindungsgemäße Fahrzeugdiagnosevorrichtung zur Bestimmung des Zustands von mindestens einer Komponente eines Kraftfahrzeugs enthält eine Schnittstelleneinrichtung, die mit einer Diagnoseschnittstelle des Kraftfahrzeugs koppelbar ist, eine erste Datenübertragungsvorrichtung, die mit der Schnittstelleneinrichtung gekoppelt ist, eine zweite Datenübertragungsvorrichtung, die mit der Schnittstelleneinrichtung gekoppelt ist, wobei die erste und die zweite Datenübertragungsvorrichtung identische Schaltungen sind, und eine Datenverarbeitungseinrichtung, die mit der ersten und der zweiten Datenübertragungsvorrichtung gekoppelt ist, wobei die Datenverarbeitungseinrichtung konfiguriert ist, über die erste und die zweite Datenübertragungsvorrichtung unterschiedliche Diagnoseprotokolle auszuführen.

Durch die Aufteilung des Datenflusses von dem Kraftfahrzeug zu der Datenverarbeitungseinrichtung auf die erste und die zweite Datenübertragungsvorrichtung wird ein insgesamt verbessertes System erreicht. Die zwei Datenübertragungsvorrichtungen können parallel arbeiten, so dass unterschiedliche Diagnoseprotokolle gleichzeitig ausgeführt werden können. Weiterhin ist es nicht erforderlich, jeweils alle datenverarbeitungsseitigen Anschlüsse der ersten und der zweiten Datenübertragungsvorrichtung mit der Datenverarbeitungseinrichtung zu verbinden, da nur die für die jeweils auszuführenden Diagnoseprotokolle relevanten datenverarbeitungsseitigen Anschlüsse zu beachten sind. Auf diese Weise hat jede der Datenübertragungsvorrichtungen eine geringere Anzahl an verbundenen datenverarbeitungsseitigen Anschlüssen, was die Integration der Bauteile erleichtert. Außerdem begrenzt die Beschränkung auf eine Auswahl an Diagnoseprotokollen die Verlustleistung von jedem der ersten und zweiten Datenübertragungsvorrichtung, was wiederum deren Entwurf und Integration erleichtert. Auch bei Ausfall einer der zwei Datenübertragungsvorrichtungen kann wenigstens eine reduzierte Anzahl von Diagnoseprotokollen ausgeführt werden. Das Vorsehen von zwei oder mehr Datenübertragungsvorrichtungen erhöht in vielerlei Hinsicht die Flexibilität bei der Implementierung der Diagnoseprotokolle in der Fahrzeugdiagnosevorrichtung. Engpässe bei der Übertragung von Daten bzw. Signalen zwischen Fahrzeugschnittstelle und Datenverarbeitungseinrichtung können reduziert oder vermieden werden.

Zudem ermöglicht die Aufteilung auf zwei oder mehr Datenübertragungsvorrichtungen eine erhöhte Flexibilität und Optimierung hinsichtlich weiterer technischer Parameter der Anschlüsse wie zum Beispiel der Leckströme, der Spannunsfestigkeit, der Eingangsimpedanz und/oder der Symmetrie hinsichtlich Kapazitätsbelag. Auf diese Weise kann die Kopplung zwischen Schnittstelleneinrichtung und Datenübertragungsvorrichtungen und/oder die Kopplung zwischen Datenübertragungsvorrichtungen und Datenverarbeitungseinrichtung optimiert werden. Dies wiederum kann zu einer erhöhten Gesamtdatenübertragungsrate zwischen Datenverarbeitungseinrichtung und Fahrzeug führen und/oder die Signalqualität verbessern. Auf diese Weise können auch die Möglichkeiten der Messung von analogen Signalen vom Fahrzeug verbessert werden.

Die Schnittstelleneinrichtung kann eine standardisierte Schnittstelle, wie z.B. einen "Diagnostic Link Connector" (DLC), aufweisen. Die Datenverarbeitungseinrichtung kann eine Microcontroller-Einheit ("Microcontroller Unit", MCU) sein, d.h. eine Microcontroller-basierte Datenverarbeitungseinheit sein. Es ist aber auch möglich, dass die Datenverarbeitungeinrichtung ein FPGA, DSP, µC oder ASIC ist. Beispielhafte standardmäßige Diagnoseprotokolle sind OBD II, EOBC, CAN, J1708, SCI, "Hi Voltage CAN" (ISO 11992), "Flexible Data Rate CAN" (FDCAN), "Diagnostic Communication over Internet Protocol" (DoIP), "Programming Voltage Generator" (Vpp).

Durch die Verwendung von zwei identischen Schaltungen für die erste und die zweite Datenübertragungsvorrichtung wird die Integration in der Fahrzeugdiagnosevorrichtung erleichtert. Weiterhin werden die Produktionskosten gering gehalten. Der Ausdruck identische Schaltungen verlangt nicht, dass die Schaltungen in jeglicher Hinsicht identisch sind und sich schaltungstechnisch vollkommen identisch verhalten. Er will vielmehr zum Ausdruck bringen, dass die Schaltungen auf dem gleichen Entwurf basieren, sich aber durch produktionstechnisch bedingte Toleranzbereiche unterscheiden können.

Der Begriff Fahrzeugdiagnosevorrichtung bezieht sich auf eine Vorrichtung, die mit einem Kraftfahrzeug koppelbar ist und mit der der Zustand von mindestens einer Komponente des Kraftfahrzeugs bestimmt werden kann. Es ist auch möglich, dass ein Fahrzeugsteuergerät oder ein Fahrzeuganzeigesystem mit Hilfe der Fahrzeugdiagnosevorrichtung gesteuert bzw. programmiert werden kann. Es ist weiterhin möglich, dass die Kommunikation zwischen Fahrzeug und Fahrzeugdiagnosevorrichtung bidirektional ist. Die Kommunikation zwischen Fahrzeug und Fahrzeugdiagnosevorrichtung kann in einem Anfrage-Antwort-Format erfolgen.

In einer Ausführungsform sind die erste und die zweite Datenverarbeitungseinrichtung integrierte, insbesondere anwendungsspezifische integrierte Schaltungen ("Application Specific Integrated Circuit", ASIC). Auf diese Weise kann das Design der Datenübertragungsvorrichtungen auf die gewünschten Diagnoseprotokolle angepasst werden, und eine kostengünstige Massenproduktion des Datenübertragungsvorrichtungs-Bausteins als integrierte Schaltung kann ermöglicht werden.

In der erfindungsgemäßen Ausführungsform weist jede der ersten und der zweiten Datenübertragungsvorrichtung eine Mehrzahl von Diagnoseprotokolltreiberschaltungen auf. Da die erste und die zweite Datenübertragungsvorrichtung identische Schaltungen sind, haben beide die gleichen Diagnoseprotokolltreiberschaltungen. Auf diese Weise sind beide Datenübertragungsvorrichtungen geeignet, die für die jeweiligen Diagnoseprotokolle erforderlichen Daten von der Schnittstelleneinrichtung zu beschaffen, ggf. aufzubereiten und weiterzuleiten. Durch Anschluss an die jeweilige Diagnoseprotokolltreiberschaltung kann die Datenverarbeitungseinrichtung das gewünschte Protokoll über die gewünschte Datenübertragungsvorrichtung ausführen.

In einer Ausführungsform ist die Datenverarbeitungseinrichtung mit einer ersten Untergruppe der Diagnoseprotokolltreiberschaltungen der ersten Datenübertragungsvorrichtung gekoppelt ist und mit einer zweiten Untergruppe der Diagnoseprotokolltreiberschaltungen der zweiten Datenübertragungsvorrichtung gekoppelt, wobei die erste Untergruppe von der zweiten Untergruppe verschieden ist. Die Kopplung mit verschiedenen Diagnoseprotokolltreiberschaltungen ist eine einfache und zuverlässige Möglichkeit dafür, unterschiedliche Diagnoseprotokolle über die erste und die zweite Datenübertragungsvorrichtung zu implementieren.

In der erfindungsgemäßen Ausführungsform weist jede der ersten und der zweiten Datenübertragungsvorrichtung eine Mehrzahl von schnittstellenseitigen Anschlüssen auf, und zumindest ein Teil der jeweiligen Diagnoseprotokolltreiberschaltung ist über mindestens eine Schaltmatrix mit den schnittstellenseitigen Anschlüssen gekoppelt. Auf diese Weise können die Diagnoseprotokolltreiberschaltungen auf die für das jeweilige Diagnoseprotokoll relevanten Eingangsdaten von dem Fahrzeug zugreifen.

In der erfindungsgemäßen Ausführungsform enthält die Schnittstelleneinrichtung eine Mehrzahl von Schnittstellenanschlüssen, die erste Datenübertragungsvorrichtung eine Mehrzahl von schnittstellenseitigen Anschlüssen, von denen mindestens eine erste Untermenge mit den Schnittstellenanschlüssen gekoppelt sind, und die zweite Datenübertragungsvorrichtung eine Mehrzahl von schnittstellenseitigen Anschlüssen, von denen mindestens eine zweite Untermenge mit den Schnittstellenanschlüssen gekoppelt sind, wobei die Kopplung der schnittstellenseitigen Anschlüsse der ersten Datenübertragungsvorrichtung mit den Schnittstellenanschlüssen der Schnittstelleneinrichtung von der Kopplung der schnittstellenseitigen Anschlüsse der zweiten Datenübertragungsvorrichtung mit den Schnittstellenanschlüssen der Schnittstelleneinrichtung verschieden ist. Auf diese Weise kann eine Vorauswahl der für die jeweiligen Diagnoseprotokolle relevanten Eingangssignale getroffen werden. Nicht jeder von dem Fahrzeug empfangene Datenstrom ist notwendigerweise für beide Datenübertragungsvorrichtungen relevant, weil unterschiedliche Diagnoseprotokolle über die zwei Datenübertragungsvorrichtungen ausgeführt werden. Außerdem kann die unterschiedliche Kopplung der Schnittstellenanschlüsse der Schnittstelleneinrichtung mit den jeweiligen schnittstellenseitigen Anschlüsse der zwei Datenübertragungsvorrichtungen ermöglichen, dass mit derselben Diagnoseprotokolltreiberschaltung unterschiedliche Diagnoseprotokolle ausgeführt werden können. Unterschiedliche Eingangsdaten können zur Realisierung unterschiedlicher Diagnoseprotokolle führen. Auch ist es möglich, die ggf. in den Datenübertragungsvorrichtungen vorgesehenen Schaltmatrix-Komponenten zu entlasten, weil die von dem Fahrzeug empfangenen Signale durch die spezielle Kopplung "vorsortiert" sein können.

In einer Ausführungsform ist die Anzahl der Schnittstellenanschlüsse gleich der Anzahl der schnittstellenseitigen Anschlüsse der ersten Datenübertragungsvorrichtung und gleich der Anzahl der schnittstellenseitigen Anschlüsse der zweiten Datenübertragungsvorrichtung, wobei jeweils alle schnittstellenseitigen Anschlüsse der ersten und der zweiten Datenübertragungsvorrichtung mit den Schnittstellenanschlüssen gekoppelt sind. Auf diese Weise stehen in beiden Datenverarbeitungsvorrichtungen alle von dem Fahrzeug empfangenen Datenströme zur Verfügung, was ein Höchstmaß an Flexibilität für die Diagnoseprotokolle erlaubt.

Es ist allerdings auch möglich, dass die Kopplung zwischen den schnittstellenseitigen Anschlüssen der ersten Datenübertragungsvorrichtung mit den Schnittstellenanschlüssen gleich der Kopplung der schnittstellenseitigen Anschlüsse der zweiten Datenübertragungsvorrichtung mit den Schnittstellenanschlüssen ist. Die Auswahl unterschiedlicher Datenströme lässt sich bei Bedarf über Schaltmatrix-Komponenten oder andere Verbindungsschaltungen erreichen.

In einer Ausführungsform sind eine oder mehrere externe Diagnoseprotokolltreiberschaltungen zwischen die Datenverarbeitungseinrichtung und eine oder beide der ersten und der zweiten Datenübertragungsvorrichtung gekoppelt. Auf diese Weise können die erste und die zweite Datenübertragungsvorrichtung von Diagnoseprotokolltreiberschaltungen freigehalten werden, die besonders komplex sind und/oder selten verwendet werden. Dies wiederum erhöht die Effizienz der Datenübertragungsvorrichtungen und vermindert deren Komplexität und Verlustleistung.

In einer Ausführungsform weist die Fahrzeugdiagnosevorrichtung weiterhin mindestens eine weitere Datenübertragungsvorrichtung auf, wobei die mindestens eine weitere Datenübertragungsvorrichtung eine zu der ersten und der zweiten Datenübertragungsvorrichtung identische Schaltung ist. Auf diese Weise kann eine weitere Aufteilung des Datenflusses und der Signalaufbereitung ermöglicht werden, wodurch die oben genannten Vorteile der Architektur mit zwei Datenübertragungsvorrichtungen erweitert werden können. Insbesondere können drei, vier, fünf oder mehr identische Datenübertragungsvorrichtungen vorhanden sein. Jede dieser Datenübertragungsvorrichtungen kann eine individuelle Kopplung mit den Schnittstellenanschlüssen der Schnittstelleneinrichtung aufweisen.

Es ist möglich, dass jede der Datenübertragungsvorrichtungen die von der Schnittstelleneinrichtung empfangenen Signale bzw. Daten unbearbeitet an die Datenverarbeitungseinrichtung weitergibt. Es ist jedoch auch möglich, dass die Datenübertragungsvorrichtungen die empfangenen Signale bzw. Daten aufbereiten. Mögliche Aufbereitungen sind Analog-zu-Digital-Umwandlungen und/oder Filteroperationen und/oder weitere Arten der Signalverarbeitung (z.B. Zeitmessungen, Frequenzanalysen, etc.). Auch können Daten in den Datenübertragungsvorrichtungen zwischengespeichert werden.

Es ist ferner möglich, dass die Fahrzeugdiagnosevorrichtung nicht nur zur Bestimmung des Zustands von mindestens einer Komponente eines Kraftfahrzeugs geeignet ist, sondern zusätzlich zur Programmierung einer im Fahrzeug befindlichen Steuereinheit, wie z.B. zur Programmierung eines Fahrzeug-Boardcomputers, vorgesehen und geeignet ist. Generell kann durch die Fahrzeugdiagnosevorrichtung jegliche Art der Kommunikation mit dem Fahrzeug vorgenommen werden.

Die Erfindung umfasst auch ein Verfahren zum Betrieb einer Fahrzeugdiagnosevorrichtung, wie in einer der Ausführungsformen oben beschrieben, welches die folgenden Schritte aufweist: Ausführen eines ersten Diagnoseprotokolls, wobei die Kommunikation zwischen der Datenverarbeitungseinrichtung und der Schnittstelleneinrichtung über die erste Datenübertragungsvorrichtung stattfindet, und Ausführen eines zweiten Diagnoseprotokolls, wobei die Kommunikation zwischen der Datenverarbeitungseinrichtung und der Schnittstelleneinrichtung über die zweite Datenübertragungsvorrichtung stattfindet. Die oben bezüglich der Fahrzeugdiagnosevorrichtung genannten Vorteile sind auch mit dem Verfahren zum Betrieb der Fahrzeugdiagnosevorrichtung erreichbar. Die oben diskutierten Modifikationen und Ausführungsformen sind analog auf das Verfahren zum Betrieb der Fahrzeugdiagnosevorrichtung anwendbar.

Es wird weiterhin eine Datenübertragungsvorrichtung für eine Fahrzeugdiagnosevorrichtung gezeigt, die kein Unterteil der beanspruchte Erfindung ist, aufweisend eine Mehrzahl von schnittstellenseitigen Anschlüssen zur Kopplung der Datenübertragungsvorrichtung an eine Schnittstelleneinrichtung der Fahrzeugdiagnosevorrichtung, eine Mehrzahl von datenverarbeitungsseitigen Anschlüssen zur Kopplung der Datenübertragungsvorrichtung an eine Datenverarbeitungseinrichtung der Fahrzeugdiagnosevorrichtung, und eine Mehrzahl von Diagnoseprotokolltreiberschaltungen, wobei die Datenübertragungsvorrichtung so konfiguriert ist, dass sie durch unterschiedliche Kopplungen zwischen der Datenübertragungsvorrichtung und der Schnittstelleneinrichtung sowie zwischen der Datenübertragungsvorrichtung und der Datenverarbeitungseinrichtung die Kommunikation zwischen der Datenverarbeitungseinrichtung und der Schnittstelleneinrichtung für eine Vielzahl von Diagnoseprotokollen ausführen kann. Dadurch, dass die Datenübertragungsvorrichtung je nach Kopplung mit der Schnittstelleneinrichtung und der Datenverarbeitungsvorrichtung die Kommunikation für unterschiedliche Diagnoseprotokolle ausführen kann, wird die Flexibilität für die Implementierung der oben diskutierten Fahrzeugdiagnosevorrichtungen mit einer, zwei oder mehr Datenübertragungsvorrichtungen bereitgestellt. Eine große Bandbreite von Fahrzeugdiagnosevorrichtungen mit unterschiedlichen Anwendungen kann mit einer einzigen Art von Datenübertragungsvorrichtung auf effiziente Weise bereitgestellt werden.

Es wird weiterhin eine Fahrzeugdiagnosevorrichtung zur Bestimmung des Zustands von mindestens einer Komponente eines Kraftfahrzeugs gezeig die kein Unterteil der beanspruchte Erfindung ist, aufweisend eine Schnittstelleneinrichtung, die mit einer Diagnoseschnittstelle des Kraftfahrzeugs koppelbar ist, genau eine Datenübertragungsvorrichtung, wie sie im vorhergehenden Absatz beschrieben ist, welche mit der Schnittstelleneinrichtung gekoppelt ist, und eine Datenverarbeitungseinrichtung, die mit der Datenübertragungsvorrichtung gekoppelt ist, wobei die Kopplung zwischen der Datenübertragungsvorrichtung und der Schnittstelleneinrichtung sowie zwischen der Datenübertragungsvorrichtung und der Datenverarbeitungseinrichtung derart ist, dass die Datenübertragungsvorrichtung die Kommunikation zwischen der Datenverarbeitungseinrichtung und der Schnittstelleneinrichtung für eine Untermenge der Vielzahl von Diagnoseprotokollen ausführen kann. So können Fahrzeugdiagnosevorrichtungen für Anwendungen, die weniger umfassend sind, wie z.B. Pannendienste, Flotten-Management, Polizei, Versicherungen oder wenig komplexe andere Zusatz-Services, auf einfache Weise mit lediglich einer Datenübertragungsvorrichtung realisiert werden.

### Kurze Beschreibung der Figuren:

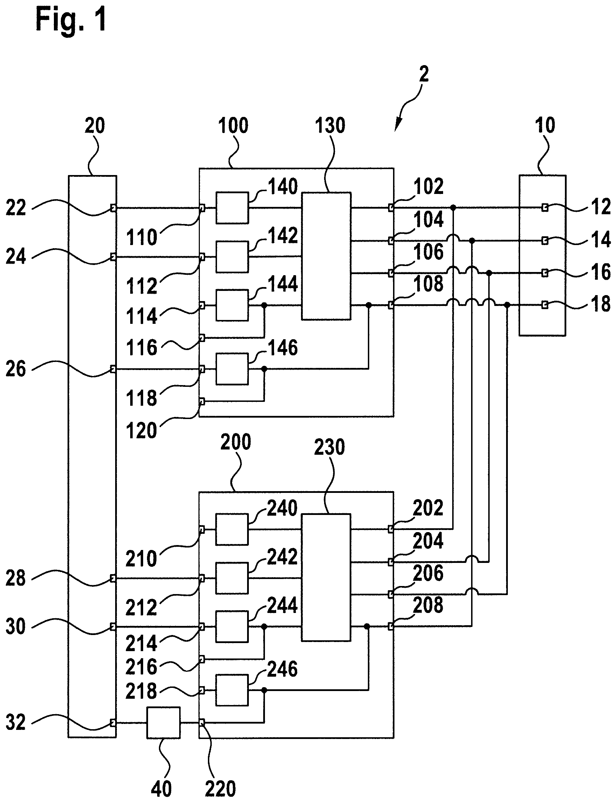

Figur 1 zeigt ein Blockdiagramm einer beispielhaften Ausführungsform der erfindungsgemäßen Fahrzeugdiagnosevorrichtung.

### Figurenbeschreibung:

Figur 1 zeigt ein Blockdiagramm einer Fahrzeugdiagnosevorrichtung 2 gemäß einer beispielhaften Ausführungsform der Erfindung.

Die Fahrzeugdiagnosevorrichtung 2 weist eine Schnittstelleneinrichtung 10, eine erste Datenübertragungsvorrichtung 100, eine zweite Datenübertragungsvorrichtung 200 und eine Datenverarbeitungseinrichtung 20 auf. Die Schnittstelleneinrichtung 10 ist mit der ersten Datenübertragungsvorrichtung 100 und der zweiten Datenübertragungsvorrichtung 200 gekoppelt. Die beiden Datenübertragungsvorrichtungen 100 und 200 sind ihrerseits mit der Datenverarbeitungseinrichtung 20 gekoppelt. Die Details dieser Verbindungen sind unten beschrieben.

Die erste Datenübertragungsvorrichtung 100 und die zweite Datenübertragungsvorrichtung 200 haben einen identischen Aufbau. D.h. sie enthalten die gleichen Schaltungselemente, welche auf die gleiche Weise miteinander verbunden sind. Nur die erste Datenübertragungsvorrichtung 100 ist im Detail beschrieben. Zur Verdeutlichung des identischen Aufbaus sind die Elemente der ersten Datenübertragungsvorrichtung 100 und der zweiten Datenübertragungsvorrichtung 200 mit korrespondierenden Bezugszeichen versehen, wobei die Bezugszeichen der zweiten Datenübertragungsvorrichtung 200 gegenüber den Bezugszeichen der ersten Datenübertragungsvorrichtung 100 um 100 erhöht sind.

Die erste Datenübertragungsvorrichtung 100 hat vier schnittstellenseitige Anschlüsse, nämlich einen ersten schnittstellenseitigen Anschluss 102, einen zweiten schnittstellenseitigen Anschluss 104, einen dritten schnittstellenseitigen Anschluss 106 und einen vierten schnittstellenseitigen Anschluss 108. Weiterhin hat die erste Datenübertragungsvorrichtung sechs datenverarbeitungsseitige Anschlüsse, nämlich einen ersten datenverarbeitungsseitigen Anschluss 110, einen zweiten datenverarbeitungsseitigen Anschluss 112, einen dritten datenverarbeitungsseitigen Anschluss 114, einen vierten datenverarbeitungsseitigen Anschluss 116, einen fünften datenverarbeitungsseitigen Anschluss 118 und einen sechsten datenverarbeitungsseitigen Anschluss 120. Weiterhin enthält die erste Datenübertragungsvorrichtung 100 eine Schaltmatrix 130 sowie vier Diagnoseprotokolltreiberschaltungen, nämlich eine erste Diagnoseprotokolltreiberschaltung 140, eine zweite Diagnoseprotokolltreiberschaltung 142, eine dritte Diagnoseprotokolltreiberschaltung 144 und eine vierte Diagnoseprotokolltreiberschaltung 146.

Der erste schnittstellenseitige Anschluss 102, der zweite schnittstellenseitige Anschluss 104 und der dritte schnittstellenseitige Anschluss 106 sind mit der Schaltmatrix 130 verbunden. Der vierte schnittstellenseitige Anschluss 108 ist mit der Schaltmatrix 130, mit der vierten Diagnoseprotokolltreiberschaltung 146 und mit dem sechsten datenverarbeitungsseitigen Anschluss 120 verbunden. Die Schaltmatrix 130 ist mit der ersten Diagnoseprotokolltreiberschaltung 140, mit der zweiten Diagnoseprotokolltreiberschaltung 142 und mit der dritten Diagnoseprotokolltreiberschaltung 144 sowie mit dem vierten datenverarbeitungsseitigen Anschluss 116 verbunden. Die erste Diagnoseprotokolltreiberschaltung 140, die zweite Diagnoseprotokolltreiberschaltung 142 und die dritte Diagnoseprotokolltreiberschaltung 144 sind mit dem ersten datenverarbeitungsseitigen Anschluss 110, mit dem zweiten datenverarbeitungsseitigen Anschluss 112 und mit dem dritten datenverarbeitungsseitigen Anschluss 114 verbunden. Die vierte Diagnoseprotokolltreiberschaltung 146 ist mit dem fünften datenverarbeitungsseitigen Anschluss 118 verbunden.

Die erste Datenübertragungsvorrichtung 100 liegt als anwendungsspezifische integrierte Schaltung vor, wobei die vier schnittstellenseitige Anschlüsse und die sechs datenverarbeitungsseitige Anschlüsse Pins der integrierten Schaltung sind. Die Verbindungen zwischen den einzelnen Komponenten sind Leiterbahnen in der integrierten Schaltung.

Wie oben gesagt, ist die zweite Datenübertragungsvorrichtung 200 identisch mit der ersten Übertragungsvorrichtung 100 aufgebaut.

Die Schnittstelleneinrichtung 10 weist vier Schnittstellenanschlüsse auf, nämlich einen ersten Schnittstellenanschluss 12, einen zweiten Schnittstellenanschluss 14, einen dritten Schnittstellenanschluss 16 und einen vierten Schnittstellenanschluss 18. Die Schnittstelleneinrichtung 10 hat eine standardisierte Schnittstelle, mit der die Fahrzeugdiagnosevorrichtung 2 an eine entsprechende Schnittstelle des Fahrzeugs ankoppelbar ist, wodurch Daten bzw. Signale zwischen der Fahrzeugdiagnosevorrichtung 2 und dem Fahrzeug ausgetauscht werden können. Die Schnittstelle zwischen der Fahrzeugdiagnosevorrichtung 2 und dem Fahrzeug kann eine beliebige Anzahl von Anschlüssen haben. Insbesondere können 4, 8, 16 oder 32 Anschlüsse vorhanden sein. Die beispielhafte Verwendung von vier Anschlüssen, wie in Fig. 1 gezeigt, dient der einfacheren Beschreibung der Erfindung im Vergleich zu einer größeren Anzahl von Schnittstellenanschlüssen.

Der erste Schnittstellenanschluss 12 ist mit dem ersten schnittstellenseitigen Anschluss 102 der ersten Datenübertragungsvorrichtung 100 sowie mit dem ersten schnittstellenseitigen Anschluss 202 der zweiten Datenübertragungsvorrichtung 200 gekoppelt. Der zweite Schnittstellenanschluss 14 ist mit dem zweiten schnittstellenseitigen Anschluss 104 der ersten Datenübertragungsvorrichtung 100 sowie mit dem vierten schnittstellenseitigen Anschluss 208 der zweiten Datenübertragungsvorrichtung 200 gekoppelt. Der dritte Schnittstellenanschluss 16 ist mit dem dritten schnittstellenseitigen Anschluss der ersten Datenübertragungsvorrichtung 100 sowie mit dem zweiten schnittstellenseitigen Anschluss 204 der zweiten Datenübertragungsvorrichtung 200 gekoppelt. Der vierte Schnittstellenanschluss 18 ist mit dem vierten schnittstellenseitigen Anschluss 108 der ersten Datenübertragungsvorrichtung 100 sowie mit dem dritten schnittstellenseitigen Anschluss 206 der zweiten Datenübertragungsvorrichtung 200 gekoppelt.

Die Datenverarbeitungseinrichtung 20 weist sechs Kommunikationsanschlüsse auf, nämlich einen ersten Kommunikationsanschluss 22, einen zweiten Kommunikationsanschluss 24, einen dritten Kommunikationsanschluss 26, einen vierten Kommunikationsanschluss 28, einen fünften Kommunikationsanschluss 30 und einen sechsten Kommunikationsanschluss 32. Der erste Kommunikationsanschluss 22, der zweite Kommunikationsanschluss 24 und der dritte Kommunikationsanschluss 26 sind mit dem ersten datenverarbeitungsseitigen Anschluss 110, dem zweiten datenverarbeitungsseitigen Anschluss 112 und dem fünften datenverarbeitungsseitigen Anschluss 118 der ersten Datenübertragungsvorrichtung 100 gekoppelt. Der vierte Kommunikationsanschluss 28, der fünfte Kommunikationsanschluss 30, und der sechste Kommunikationsanschluss 32 sind mit dem zweiten datenverarbeitungsseitigen Anschluss 112, dem dritten datenverarbeitungsseitigen Anschluss 214 und dem sechsten datenverarbeitungsseitigen Anschluss 220 der zweiten Datenübertragungsvorrichtung 200 gekoppelt,. Dabei sind der sechste Kommunikationsanschluss 32 und der sechste datenverarbeitungsseitige Anschluss 220 der zweiten Datenübertragungsvorrichtung 200 über eine externe Diagnoseprotokolltreiberschaltung 40 miteinander verbunden.

Es ist nochmal ausdrücklich darauf hingewiesen, dass es sich bei der Ausführungsform in Figur 1 um eine rein beispielhafte Implementierung handelt. Insbesondere bezüglich der Anordnung, Anzahl und Kopplung der Schnittstellenanschlüsse der Schnittstelleneinrichtung, der schnittstellenseitigen Anschlüsse der Datenübertragungsvorrichtungen, der datenverarbeitungsseitigen Anschlüsse der Datenübertragungsvorrichtungen, der Kommunikationsanschlüsse der Datenverarbeitungseinrichtung und der Protokolltreiberschaltungen handelt es sich um ein Beispiel, das lediglich die Erfindung verdeutlichen, nicht aber beschränken soll.

Die Begriffe schnittstellenseitige Anschlüsse und datenverarbeitungsseitige Anschlüsse beziehen sich nicht auf die geometrische Anordnung der Anschlüsse. Stattdessen stellen die Begriffe lediglich eine Differenzierung zwischen den Anschlüssen dar, die zur Kopplung mit der Schnittstelleneinrichtung bestimmt sind, und den Anschlüssen, die zur Kopplung mit den Datenverarbeitungsvorrichtung bestimmt sind.

Die Funktion der Fahrzeugdiagnosevorrichtung 2 ist im Folgenden erklärt. Allgemein gesagt, initiiert die Datenverarbeitungseinrichtung 20 ein gewünschtes Diagnoseprotokoll durch ein entsprechendes Signal an die entsprechende Diagnoseprotokolltreiberschaltung. Die angestoßene Diagnoseprotokolltreiberschaltung bewirkt dann die Weitergabe und ggf. Aufbereitung der für das Diagnoseprotokoll relevanten Daten bzw. Signale zwischen dem Fahrzeug und der Datenverarbeitungseinrichtung 20 durch die erste Datenübertragungsvorrichtung 100 oder durch die zweite Datenübertragungsvorrichtung 200. Die Datenverarbeitungseinrichtung 20 wertet dann die empfangenen Daten bzw. Signale aus und stellt fest, ob und inwieweit sich die getestete Komponente bzw. die getesteten Komponenten des Fahrzeugs entsprechend ihrer Spezifikation verhalten. Das Ergebnis dieser Prüfung kann die Datenverarbeitungseinrichtung speichern oder über eine Ausgabeeinrichtung, wie z.B. ein Display (nicht gezeigt), ausgeben. Es ist auch möglich, dass die Datenverarbeitungseinrichtung 20 die Ergebnisse an eine weitere Einheit, wie z.B. einen Wartungscomputer, weiterleitet. Dies kann auf drahtgebundenem oder drahtlosem Weg passieren, wobei der drahtlose Weg bei portablen Fahrzeugdiagnosevorrichtungen in vielen Fällen zu bevorzugen ist.

Des Weiteren können über die Datenverarbeitungseinrichtung 20 auch Daten für die Programmierung von Steuergeräten im Fahrzeug zu dem Fahrzeug geführt werden. Zudem ist es möglich, dass über die Datenverarbeitungseinrichtung 20 analoge Signal an einen Analog-zu-Digital-Konverter geführt werden können, um z.B. eine detaillierte Diagnose bei Problemen mit der Verbindungsaufnahme zu ermöglichen bzw. einen Scan-Zyklus zu aktivieren.

Da in der vorliegenden Ausführungsform fünf Diagnoseprotokolltreiberschaltungen 140, 142, 144, 146 und 40 zur Verfügung stehen, kann die Datenverarbeitungseinrichtung 20 mindestens fünf verschiedene Diagnoseprotokolle ausführen. Wie in Fig. 1 zu sehen ist, kann die Datenverarbeitungseinrichtung 20 ein erstes Diagnoseprotokoll, ein zweites Diagnoseprotokoll und ein viertes Diagnoseprotokoll über die erste Diagnoseprotokolltreiberschaltung 140, die zweite Diagnoseprotokolltreiberschaltung 142 und die vierte Diagnoseprotokolltreiberschaltung 146 der ersten Datenübertragungsvorrichtung 100 ausführen.

Weiterhin kann die Datenverarbeitungseinrichtung 20 ein drittes Diagnoseprotokoll über die dritte Diagnoseprotokolltreiberschaltung 244 und ein fünftes Diagnoseprotokoll über die externe Diagnoseprotokolltreiberschaltung 40 ausführen. Je nach Verwendung und Konfiguration der zweiten Diagnoseprotokolltreiberschaltung 142 bzw. 242, kann die Datenverarbeitungseinrichtung 20 entweder das zweite Diagnoseprotokoll auch über die zweite Datenübertragungsvorrichtung 200 ausführen oder ein weiteres Diagnoseprotokoll über den Kommunikationsanschluss 28 abfragen. Grund für diese zwei Möglichkeiten sind die unterschiedlichen Kopplungen zwischen der Schnittstelleneinrichtung 10 und den jeweiligen schnittstellenseitigen Anschlüssen der ersten und der zweiten Datenübertragungsvorrichtung 100, 200. Durch die Schaltmatrix 130 kann es möglich sein, dass die zweite Diagnoseprotokolltreiberschaltung 242 der zweiten Datenübertragungsvorrichtung 200 die gleichen Daten bzw. Signale weiterleitet wie die zweite Diagnoseprotokolltreiberschaltung 142 der ersten Datenübertragungsvorrichtung. Es ist aber auch möglich, dass durch die Permutation der Eingangssignale ein anderes Diagnoseprotokoll implementiert wird.

Auch durch eine unterschiedliche Ansteuerung des Schaltmatrix 130 und der Schaltmatrix 230 in den zwei Datenübertragungsvorrichtungen können unterschiedliche Diagnoseprotokolle verwirklicht werden. Es ist möglich, dass die Schaltmatrix 130 (und damit ebenso die Schaltmatrix 230) in der Lage ist, jeden ihrer Eingänge mit jedem ihrer Ausgänge zu verbinden, d.h. jegliche Schaltkombination zu ermöglichen. Es ist aber auch möglich, dass die Schaltmatrix 130 (und damit ebenso die Schaltmatrix 230) eine begrenzte Anzahl an Schaltkombinationen ermöglicht, insbesondere eine begrenzte Anzahl von parallelen Schaltkombinationen zur gleichen Zeit ermöglicht. Da die zwei identischen Datenübertragungsvorrichtungen 100 und 200 vorgesehen sind, kann jede Schaltmatrix 130 bzw. 230 begrenzt ausgelegt werden, wobei die Kombination der zwei Schaltmatrizen 130 und 230 die gesamte gewünschte Signalweiterleitungsbandbreite liefert. Es kann eine wenig komplexe und kostengünstige Art von Schaltmatrix bereitgestellt werden, welche für den Datenfluss in wenig komplexen Anwendungen ausreicht und welche in Kombination mit einer weiteren Schaltmatrix die Schaltkapazität für aufwändige Anwendungen erfüllt.

Weiterhin wird auch auf das durch die externe Diagnoseprotokolltreiberschaltung 40 implementierte Diagnoseprotokoll verwiesen, welches auf das Eingangssignal des zweiten Schnittstellenanschlusses 14 direkt zugreift. Dieses Signal ist an dem sechsten datenverarbeitungsseitigen Anschluss 120 der ersten Datenübertragungsvorrichtung nicht verfügbar. So wird verdeutlicht, dass durch die unterschiedlichen Kopplungen zwischen den schnittstellenseitigen Anschlüssen der Übertragungsvorrichtungen und der Schnittstelleneinrichtung weitere Protokolle möglich werden, die mit einer einzigen Datenübertragungsvorrichtung nicht oder nur unter einer bestimmten Verwendung der Schaltmatrix 130 möglich wären.

Im Allgemeinen ist ersichtlich, dass die Daten- bzw. Signalübertragung für die Ausführung verschiedener Diagnoseprotokolle auf die zwei Datenübertragungsvorrichtungen 100, 200 aufgeteilt werden kann, wobei das Vorsehen der zweiten Datenübertragungsvorrichtung nicht nur einen schnelleren, parallelen Betrieb von Diagnoseprotokollen erlaubt, sondern auch zusätzliche Flexibilität bei der Implementierung von Protokollen bereitstellt.

## Patentansprüche

1. Fahrzeugdiagnosevorrichtung (2) zur Bestimmung des Zustands von mindestens einer Komponente eines Kraftfahrzeugs, aufweisend:
eine Schnittstelleneinrichtung (10), die mit einer Diagnoseschnittstelle des Kraftfahrzeugs koppelbar ist,
eine erste Datenübertragungsvorrichtung (100), die mit der Schnittstelleneinrichtung gekoppelt ist,
eine zweite Datenübertragungsvorrichtung (200), die mit der Schnittstelleneinrichtung gekoppelt ist, wobei jede der ersten und der zweiten Datenübertragungsvorrichtung (100, 200) eine Mehrzahl von Diagnoseprotokolltreiberschaltungen (140-146, 240-246) aufweist, und
eine Datenverarbeitungseinrichtung (20), die mit der ersten und der zweiten Datenübertragungsvorrichtung (100, 200) gekoppelt ist, wobei die Datenverarbeitungseinrichtung (20) konfiguriert ist über die erste und die zweite Datenübertragungsvorrichtung (100, 200) unterschiedliche Diagnoseprotokolle auszuführen,
wobei jede der ersten und der zweiten Datenübertragungsvorrichtung (100, 200) eine Mehrzahl von schnittstellenseitigen Anschlüssen (102-108, 202-208) aufweist und wobei zumindest ein Teil der jeweiligen Diagnoseprotokolltreiberschaltungen (140-146, 240-246) über mindestens eine Schaltmatrix (130, 230) mit den schnittstellenseitigen Anschlüssen (102-108, 202-208) gekoppelt sind,
**dadurch gekennzeichnet, dass** die erste und die zweite Datenübertragungsvorrichtung (100, 200) identische Schaltungen sind,
wobei die Schnittstelleneinrichtung (10) eine Mehrzahl von Schnittstellenanschlüssen (12-18) aufweist, wobei mindestens eine erste Untermenge der schnittstellenseitigen Anschlüsse (102-108) der ersten Datenübertragungsvorrichtung (100) mit den Schnittstellenanschlüssen (12-18) gekoppelt sind und mindestens eine zweite Untermenge der schnittstellenseitigen Anschlüsse (202-208) der zweiten Datenübertragungsvorrichtung (200) mit den Schnittstellenanschlüssen (12-18) gekoppelt sind, wobei die Kopplung der schnittstellenseitigen Anschlüsse (102-108) der ersten Datenübertragungsvorrichtung (100) mit den Schnittstellenanschlüssen (12-18) der Schnittstelleneinrichtung (10) von der Kopplung der schnittstellenseitigen Anschlüsse (202-208) der zweiten Datenübertragungsvorrichtung (200) mit den Schnittstellenanschlüssen (12-18) der Schnittstelleneinrichtung (10) verschieden ist.

2. Fahrzeugdiagnosevorrichtung (2) nach Anspruch 1, wobei die erste und die zweite Datenübertragungsvorrichtung (100, 200) integrierte Schaltungen, insbesondere anwendungsspezifische integrierte Schaltungen (ASIC), sind.

3. Fahrzeugdiagnosevorrichtung (2) nach Anspruch 1 oder 2 , wobei die Datenverarbeitungseinrichtung (10) mit einer ersten Untergruppe (140, 142, 146) der Diagnoseprotokolltreiberschaltungen (140, 142, 144, 146) der ersten Datenübertragungsvorrichtung (100) gekoppelt ist und wobei die Datenverarbeitungseinrichtung (10) mit einer zweiten Untergruppe (242, 244) der Diagnoseprotokolltreiberschaltungen (240, 242, 244, 246) der zweiten Datenübertragungsvorrichtung (200) gekoppelt ist, wobei die erste Untergruppe von der zweiten Untergruppe verschieden ist.

4. Fahrzeugdiagnosevorrichtung (2) nach einem der Ansprüche 1 bis 3, wobei eine oder mehrere externe Diagnoseprotokolltreiberschaltungen (40) zwischen die Datenverarbeitungseinrichtung (20) und eine oder beide der ersten und der zweiten Datenübertragungsvorrichtung (100, 200) gekoppelt sind.

5. Fahrzeugdiagnosevorrichtung (2) nach einem der Ansprüche 1 bis 4, weiterhin aufweisend mindestens eine weitere Datenübertragungsvorrichtung, wobei die mindestens eine weitere Datenübertagungsvorrichtung eine zu der ersten und der zweiten Datenübertragungsvorrichtung (100, 200) identische Schaltung ist.

6. Verfahren zum Betrieb einer Fahrzeugdiagnosevorrichtung (2) nach einem der Ansprüche 1 bis 5, aufweisend die Schritte:
Ausführen eines ersten Diagnoseprotokolls, wobei die Kommunikation zwischen der Datenverarbeitungseinrichtung (20) und der Schnittstelleneinrichtung (10) über die erste Datenübertragungsvorrichtung (100) stattfindet, und
Ausführen eines zweiten Diagnoseprotokolls, wobei die Kommunikation zwischen der Datenverarbeitungseinrichtung (20) und der Schnittstelleneinrichtung (10) über die zweite Datenübertragungsvorrichtung (200) stattfindet,
wobei die erste und die zweite Datenübertragungsvorrichtung (100, 200) parallel arbeiten, so dass unterschiedliche Diagnoseprotokolle gleichzeitig ausgeführt werden.

## Claims

1. Vehicle diagnostic device (2) for determining the condition of at least one component of a motor vehicle, having:
an interface apparatus (10) that is able to be coupled to a diagnostic interface of the motor vehicle,
a first data transmission device (100) that is coupled to the interface apparatus,
a second data transmission device (200) that is coupled to the interface apparatus, wherein each of the first and the second data transmission device (100, 200) has a plurality of diagnostic protocol driver circuits (140-146, 240-246), and
a data processing apparatus (20) that is coupled to the first and the second data transmission device (100, 200), wherein the data processing apparatus (20) is configured so as to implement different diagnostic protocols via the first and the second data transmission device (100, 200),
wherein each of the first and the second data transmission device (100, 200) has a plurality of interface-side connections (102-108, 202-208) and wherein at least some of the respective diagnostic protocol driver circuits (140-146, 240-246) are coupled to the interface-side connections (102-108, 202-208) via at least one switching matrix (130, 230),
**characterized in that** the first and the second data transmission device (100, 200) are identical circuits, wherein the interface apparatus (10) has a plurality of interface connections (12-18), wherein at least one first subset of the interface-side connections (102-108) of the first data transmission device (100) is coupled to the interface connections (12-18) and at least one second subset of the interface-side connections (202-208) of the second data transmission device (200) is coupled to the interface connections (12-18), wherein the coupling of the interface-side connections (102-108) of the first data transmission device (100) to the interface connections (12-18) of the interface apparatus (10) is different from the coupling of the interface-side connections (202-208) of the second data transmission device (200) to the interface connections (12-18) of the interface apparatus (10).

2. Vehicle diagnostic device (2) according to Claim 1, wherein the first and the second data transmission device (100, 200) are integrated circuits, in particular application-specific integrated circuits (ASIC).

3. Vehicle diagnostic device (2) according to Claim 1 or 2, wherein the data processing apparatus (10) is coupled to a first subgroup (140, 142, 146) of the diagnostic protocol driver circuits (140, 142, 144, 146) of the first data transmission device (100), and wherein the data processing apparatus (10) is coupled to a second subgroup (242, 244) of the diagnostic protocol driver circuits (240, 242, 244, 246) of the second data transmission device (200), wherein the first subgroup is different from the second subgroup.

4. Vehicle diagnostic device (2) according to one of Claims 1 to 3, wherein one or more external diagnostic protocol driver circuits (40) are coupled between the data processing apparatus (20) and one or both of the first and the second data transmission device (100, 200).

5. Vehicle diagnostic device (2) according to one of Claims 1 to 4, furthermore having at least one further data transmission device, wherein the at least one further data transmission device is a circuit identical to the first and the second data transmission device (100, 200).

6. Method for operating a vehicle diagnostic device (2) according to one of Claims 1 to 5, having the steps of:
implementing a first diagnostic protocol, wherein the communication between the data processing apparatus (20) and the interface apparatus (10) takes place via the first data transmission device (100), and
implementing a second diagnostic protocol, wherein the communication between the data processing apparatus (20) and the interface apparatus (10) takes place via the second data transmission device (200),
wherein the first and the second data transmission device (100, 200) operate in parallel, such that different diagnostic protocols are implemented at the same time.

## Revendications

1. Dispositif de diagnostic de véhicule (2) destiné à déterminer l'état d'au moins un composant d'un véhicule automobile, ledit dispositif comprenant :
un moyen d'interface (10) qui peut être couplé à une interface de diagnostic du véhicule automobile,
un premier dispositif de transmission de données (100) qui est couplé au moyen d'interface,
un deuxième dispositif de transmission de données (200) qui est couplé au moyen d'interface, chacun des premier et deuxième dispositifs de transmission de données (100, 200) comportant une pluralité de circuits pilotes de protocole de diagnostic (140-146, 240-246), et
un moyen de traitement de données (20) qui est couplé au premier et au deuxième dispositif de transmission de données (100, 200), le moyen de traitement de données (20) étant conçu pour exécuter différents protocoles de diagnostic par le biais du premier et du deuxième dispositif de transmission de données (100, 200),
chacun des premier et deuxième dispositifs de transmission de données (100, 200) comportant une pluralité de connexions côté interface (102-108, 202-208) et au moins une partie des circuits pilotes de protocole de diagnostic respectifs (140-146, 240-246) étant couplée aux connexions côté interface (102-108, 202-208) par le biais d'au moins une matrice de commutation (130, 230),
**caractérisé en ce que** le premier et le deuxième dispositif de transmission de données (100, 200) sont des circuits identiques,
le moyen d'interface (10) comportant une pluralité de connexions d'interface (12-18), au moins un premier sous-ensemble de connexions côté interface (102-108) du premier dispositif de transmission de données (100) étant couplé aux connexions d'interface (12-18) et au moins un deuxième sous-ensemble de connexions côté interface (202-208) du deuxième dispositif de transmission de données (200) étant couplé aux connexions d'interface (12-18), le couplage des connexions côté interface (102-108) du premier dispositif de transmission de données (100) aux connexions d'interface (12-18) du moyen d'interface (10) étant différent du couplage des connexions côté interface (202-208) du deuxième dispositif de transmission de données (200) aux connexions d'interface (12-18) du moyen d'interface (10).

2. Dispositif de diagnostic de véhicule (2) selon la revendication 1, le premier et le deuxième dispositif de transmission de données (100, 200) étant des circuits intégrés, en particulier des circuits intégrés à application spécifique (ASIC).

3. Dispositif de diagnostic de véhicule (2) selon la revendication 1 ou 2, le moyen de traitement de données (10) étant couplé à un premier sous-groupe (140, 142, 146) de circuits pilotes de protocole de diagnostic (140, 142, 144, 146) du premier dispositif de transmission de données (100) et le moyen de traitement de données (10) étant couplé à un deuxième sous-groupe (242, 244) de circuits pilotes de protocole de diagnostic (240, 242, 244, 246) du deuxième dispositif de transmission de données (200), le premier sous-groupe étant différent du deuxième sous-groupe.

4. Dispositif de diagnostic de véhicule (2) selon l'une des revendications 1 à 3, un ou plusieurs circuits pilotes de protocole de diagnostic extérieurs (40) étant couplés entre le dispositif de traitement de données (20) et l'un des premier et deuxième dispositifs de transmission de données (100, 200) ou les deux.

5. Dispositif de diagnostic de véhicule (2) selon l'une des revendications 1 à 4, comprenant en outre au moins un autre dispositif de transmission de données, l'au moins un autre dispositif de transmission de données étant un circuit identique aux premier et deuxième dispositifs de transmission de données (100, 200) .

6. Procédé de fonctionnement d'un dispositif de diagnostic de véhicule (2) selon l'une des revendications 1 à 5, le procédé comprenant les étapes suivantes :
exécuter un premier protocole de diagnostic, la communication entre le moyen de traitement de données (20) et le moyen d'interface (10) se faisant par le biais du premier dispositif de transmission de données (100), et
exécuter un deuxième protocole de diagnostic, la communication entre le moyen de traitement de données (20) et le moyen d'interface (10) se faisant par le biais du deuxième dispositif de transmission de données (200),
les premier et deuxième dispositifs de transmission de données (100, 200) fonctionnant en parallèle de façon à exécuter différents protocoles de diagnostic simultanément.
